(19) Europäisches Patentamt
European Patent Office
Office européen des brevets

(11) Publication number: 0 319 205
A2

(12) **EUROPEAN PATENT APPLICATION**

(21) Application number: 88311179.1

(51) Int. Cl.⁴: C08K 3/24 , C08K 7/08

(22) Date of filing: 25.11.88

(30) Priority: 30.11.87 JP 302582/87

(43) Date of publication of application:
07.06.89 Bulletin 89/23

(84) Designated Contracting States:
AT BE CH DE ES FR GB GR IT LI LU NL SE

(71) Applicant: POLYPLASTICS CO. LTD.
30, Azuchimachi 2-chome
Higashi-ku Osaka-shi Osaka(JP)

(72) Inventor: Minamisawa, Tsuyoshi
36-6, Kamo
Mishima-shi Shizuoka(JP)
Inventor: Mitsuuchi, Masamichi
885-11, Miyajima
Fuji-shi Shizuoka(JP)
Inventor: Kakizaki, Hideo
885-11, Miyajima
Fuji-shi Shizuoka(JP)

(74) Representative: Jackson, Peter et al
HYDE, HEIDE & O'DONNELL 146 Buckingham
Palace Road
London SW1W 9TR(GB)

(54) **Crystalline thermoplastic resin composition.**

(57) A crystalline thermoplastic resin composition comprises 99 to 40 percent by weight of a crystalline thermoplastic resin having a melting point of 160°c or higher and 1 to 60 percent by weight of fibers of potassium titanate mainly comprising the potassium titanate having the formula: $K_2O \cdot 6TiO_2 \cdot nH_2O$ and containing 0.30 percent by weight or lower of potassium compounds being extractable with water.

EP 0 319 205 A2

Xerox Copy Centre

# Crystalline Thermoplastic Resin Composition

(Field of Industrial Application)

This invention relates to a resin composition which is prepared by blending a crystalline thermoplastic resin with potassium titanate fibers of specific properties.

(Statement of Prior Art)

Recently crystalline thermoplastic resins, which are excellent in, for example, mechanical properties, chemical resistance and moldability, have been widely applied to various products including electrical components, electronic components and automobile parts. It has been frequently attempted to further improve the properties thereof by adding fibrous fillers such as glass fibers or carbon fibers or plate or particulate fillers such as glass flake, glass beads, mica or talc thereto, when an enhanced strength, stiffness or thermal resistance is required.

Among these fillers, potassium titanate fibers have attracted public attention since they are superior to other inorganic fillers in various points. Namely, potassium titanate fibers are scarcely accompanied by troubles observed in the cases of other fibrous fillers, for example, an increase in molding anistropy or the deterioration of the surface conditions of a molded product. Further they seldom cause a decrease in strength or an increase in brittleness, different from the plate or particulate fillers. Furthermore they enhance the strength, stiffness and thermal resistance without damaging the surface conditions of a molded product. Furthermore they have excellent slipperiness.

As described above, potassium titanate fibers have basically excellent properties as a filler. However the addition of the same into a crystalline thermoplastic resin, in particular, one which has a high melting point and is thus to be extruded and molded at a high temperature, such as polyester, polyarylene sulfide or polyacetal resins, would cause some troubles including the discoloration of the resin, decreases in physical properties thereof or an increase in the melt viscosity thereof. These troubles are particularly obvious when the resin composition is retained at a high temperature for a prolonged period of time.

Thus the hue and physical properties of the obtained products vary depending on temperature or retention time and cause scattering of qualities, which significantly damages the reliability and commercial value of the products. Therefore it has been urgently required to overcome these problems.

(Summary of the Invention)

Under these circumstances, the present inventors have examined the relationship between the deterioration and discoloration behaviors of a crystalline thermoplastic resin at a high temperature and the properties of potassium titanate fibers in detail and have completed the present invention.

Accordingly, the present invention relates to a crystalline thermoplastic resin composition prepared by blending a crystalline thermoplastic resin having a melting point of 160 °C or above with 1 to 60 % by weight, based on the total composition, of potassium titanate fibers, wherein said potassium titanate fibers mainly comprise those represented by the following formula:

$K_2O \cdot 6TiO_2 \cdot nH_2O$

wherein n is 0 or 1/2,

and contains 0.30 % by weight or less, based on the potassium titanate in terms of potassium and determined by the process as will be described hereinafter, of water-extractable potassium compounds.

A crystalline thermoplastic resin composition of the invention comprises 99 to 40 percent by weight of a crystalline thermoplastic resin having a melting point of 160 °c or higher and 1 to 60 percent by weight of fibers of potassium titanate mainly comprising the potassium titanate having the formula: $K_2O \cdot 6TiO_2 \cdot nH_2O$ in which n is zero or 1/2, and containing 0.30 percent by weight or lower, based on the potassium titanate mixture in terms of potassium, determined according to the method as defined in the disclosure, of potassium compounds being extractable with water.

It is preferable that the potassium titanate comprises 50 percent by weight or higher of the potassium titanate having the above defined formula. The composition may further comprise an epoxy compound, an isocyanate compound, a silane compound and/or another titanate compound.

The crystalline thermoplastic resin to be used in the present invention comprises one or more resins and has a melting point of 160 °C or above.

When the present invention is applied to a crystalline thermoplastic resin having a lower melting point, the obtained effects would hardly differ from those achieved by blending conventional potassium titanate fibers. More particularly, the effects of the present invention become obvious when the composition is processed, i.e., extruded or molded at a temperature of approximately 180 °C or above. The effects of the present invention become further obvious at a processing temperature of 200 °C or above.

Examples of the crystalline thermoplastic resins satisfying the above requirement and suitable for the present invention include polyester resins, polyarylene sulfide resins, polyacetal resins and polyamide resins.

The polyester resin to be used herein includes those prepared by polycondensing a dicarboxylic acid compound with a dihydroxy compound, by polycondensing a hydroxy carboxylic acid compound or by polycondensing a mixture comprising these three components. The present invention is effective on both a homopolyester and a copolyester.

Examples of the polyester resin include polyethylene terephthalate, polybutylene terephthalate and aromatic liquid crystal polyesters.

The polyarylene sulfide resin to be used herein includes polymers or copolymers containing 70 % by mol or more of repeating units of the general formula -(Ar-S)-, wherein Ar represents an aryl group. Typical examples thereof are polyphenylene sulfide containing 70 % by mol or more of a repeating unit

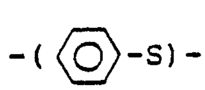

and copolymers thereof. Among these polyarylene sulfide resins, those having a melt viscosity of 10 to 20000 P, in particular 100 to 5000 P, as determined at a temperature of 310 °C and at a shear rate of 12000/sec, are particularly preferable.

The polyacetal resin to be used herein includes polyacetal homopolymers as well as polyacetal copolymers wherein the main chain mostly comprises oxymethylene chains.

The polyamide resin to be used herein includes those obtained by ring opening polymerization of a cyclic aliphatic lactam, by polycondensing an aliphatic diamine with an aliphatic or aromatic dicarboxylic acid or by polycondensing an amino acid.

In the present invention, either one of these crystalline thermoplastic resins or a mixture thereof may be employed.

Now the potassium titanate fibers to be used in the present invention will be described in detail.

Generally, potassium titanate fibers are represented by the following general formula (I) :

$K_2O \cdot mTiO_2 \cdot nH_2O$ (I)

wherein m is 1 to 8 while n is 0 or 1/2.

Although the composition of potassium titanate fibers widely varies, a mixture of those wherein m is 4 or 6 is commonly employed. The specific potassium titanate fibers to be used in the present invention are special fibers composed of whiskers represented by the formula:

$K_2O.6TiO_2.nH_2O$

wherein n is 0 or 1/2,

at a purity exceeding a given level.

Potassium titanate fibers wherein m is 4 would be eluted in a water extraction test under specified conditions because of the crystalline structure thereof. On the other hand, those wherein m is 6 would not be extracted. Thus the potassium titanate fibers to be used in the present invention may be defined through a water extraction test.

Thus, the potassium titanate fibers to be used in the present invention mainly comprise $K_2O.6TiO_2.nH_2O$ together with 0.30% by weight or less, based on the potassium titanate in terms of potassium and determined by the following method, of water-extractable titanium compounds such as $K_2O.4TiO_2.nH_2O$.

The method mentioned above and in the claims for determining the amount of water-extractable potassium compounds in the composition, measured in terms of potassium, comprises boiling 5 g of potassium titanate fibers in 100 ml of water for ten hours and then measuring the potassium ions eluted in the water by atomic absorption spectrophotometry. The content of undesirable water-extractable potassium compounds in potassium titanate fibers may be relatively expressed thereby.

When potassium titanate fibers containing more than 0.30 % by weight of water-extractable potassium compounds are employed, the resulting resin might be deteriorated during melt processing such as

extrusion or molding, which causes undesirable changes such as decreases in physical properties or discoloration. When the resin should be retained in a molten state for a prolonged period of time, these decreases in physical properties are particularly serious. Accordingly, it is preferable that the content of the water-extractable potassium compound in terms of potassium is not more than 0.20 % by weight, still preferably not more than 0.10 % by weight, in order to achieve desirable properties under more severe conditions.

The shape of the potassium titanate fibers to be used in the present invention is not particularly restricted. Thus common ones having an average fiber length of 5 to 200 µm and an average fiber diameter of 0.05 to 2.0 µm may be employed as such. Those having an average fiber length of 10 to 30 µm and an average fiber diameter of 0.1 to 0.5 µm are preferable.

The process for the production of the potassium titanate fibers is not particularly restricted. Namely those produced by, for example, calcination, melting, hydrothermic process, flux process, melt formation or slow-cooling calcination and optionally subjected to a post treatment such as high-temperature calcination or washing with water may be employed so long as they satisfy the above requirements.

The composition of the present invention comprises these potassium titanate fibers in an amount of 1 to 60 % by weight based on the total composition. When the content of the potassium titanate fibers is less than 1 % by weight, the effects of enhancing the strength and stiffness of the resin are unsatisfactory. When it exceeds 60 % by weight, on the other hand, the processing such as molding of the resulting composition becomes difficult. Therefore it is preferable that the composition of the present invention comprises 3 to 50 % by weight of the potassium titanate fibers, by taking the reinforcing effects thereof into consideration.

As described above, the incorporation of the specific potassium titanate fibers of the present invention into a crystalline thermoplastic resin brings about sufficient reinforcing effects. The molded product thus obtained sustains excellent surface conditions and slipperiness which are scarcely deteriorated even when it is retained at a high temperature. However these excellent properties can be further improved by adding 0.01 to 5 % by weight, based on the total composition, of one or more materials selected from among isocyanate compounds, epoxy compounds, silane compounds and titanate compounds to the composition. Examples of these compounds include hexamethylene diisocyanate, diphenylmethane diisocyanate, tolylene diisocyanate, γ-glycidoxypropyltrimethoxysilane, γ-glycidoxypropyltriethoxysilane, β-(3,4-epoxycyclohexyl)ethyltrimethoxysilane, γ-mercaptopropyltrimethoxysilane, γ-mercaptopropyltriethoxysilane, vinyltrimethoxysilane, γ-aminopropyltrimethoxysilane, γ-aminopropyltriethoxysilane, isopropyl triisostearoyl titanate, isopropyl tridecylbenzenesulfonyl titanate, tetraisopropyl bis(dioctyl phosphite) titanate and tetraoctyl bis(ditridecyl phosphite) titanate. These compounds may be simultaneously mixed with the resin and potassium titanate fibers. Alternately the potassium titanate fibers may be preliminarily surface-treated therewith and then blended with the resin.

The composition of the present invention may further comprise fibrous, powdery/particulate or plate filler(s), if required. Further it may be blended with crystalline or noncrystalline thermoplastic resin(s) having a melting point lower than 160 °C.

Examples of the fibrous fillers include inorganic fibrous materials such as glass fiber, asbestos fiber, carbon fiber, alumina fiber, zirconia fiber, boron nitride fiber, silicon nitride fiber and boron fiber as well as fibers of metals such as stainless steel, aluminum, titanium, copper and brass.

Examples of the powdery/particulate fillers include carbon black, quartz powder, glass beads, glass powder, aluminum silicate, kaolin, talc, clay, kieselguhr, metal oxides such as iron oxide, titanium oxide and zinc oxide, metal carbonates such as calcium carbonate and magnesium carbonate, metal sulfates such as calcium sulfate and barium sulfate, silicon carbide, silicon nitride, boron nitride and various metal powders.

Examples of the plate fillers include mica, glass flakes and various metal foils.

Furthermore the composition of the present invention may optionally contain common crystalline thermoplastic resins as well as known additives generally added to crystalline thermoplastic resins, such as stabilizers, for example, plasticizers, antioxidants and UV absorbers, antistatic agents, surfactants, flame retardants, colorants such as dyes and pigments, lubricants for improving the flowability or release properties, lubricants and crystallization promoters such as nucleating agents, if required.

The resin composition of the present invention may be produced by a conventional method with the use of conventional equipment employed in the art. Namely, it may be produced by blending required components, kneading the resulting mixture in a single- or twin-screw extruder and extruding the same to thereby give pellets for molding. Some of the required components may be preliminarily mixed to thereby give a master batch, which is then blended and molded. Alternately part or the whole of the polymers are finely divided to thereby accelerate the dispersion of the same and then blended and melt-extruded.

(Examples)

To further illustrate the present invention, and not by way of limitation, the following Examples will be given.

Examples 1 to 4 and Comparative Examples 1 and 2

An aromatic liquid crystal polyester polymer, which will be described hereinafter, was mixed with 30 % by weight of potassium titanate fibers differing in the water-extractable potassium content, in terms of potassium, as shown in Table 1. The obtained mixture was molten and kneaded at approximately 290 °C in an extruder and extruded to thereby give pellets. These pellets were air-dried at 140 °C and injection-molded at a cylinder temperature of approximately 280 °C and a mold temperature of 120 °C under an injection pressure of 600 kg/cm$^2$ to thereby give a sample piece. The physical properties thereof were determined according to ASTM.

Separately, the pellets were retained within a molding machine at 300 °C for 15 minutes and then molded into another test piece, which was then evaluated in the same manner as the one described above. The discoloration (ΔE) was calculated according to the following equation by determining L, a and b values with a color difference meter:
$\Delta E = \sqrt{(L_1 - L_0)^2 + (a_1 - a_0)^2 + (b_1 - b_0)^2}$ wherein $L_0$, $a_0$ and $b_0$ represent the initial values while $L_1$, $a_1$ and $b_1$ represent those determined after the retention treatment.
Table 1 shows the results.

The aromatic liquid crystal polyester polymer used herein mainly comprised the following repeating units at a molar ratio of 70/30:

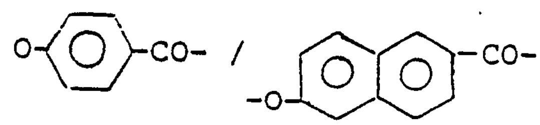

As described above, the water-extractable potassium content was determined by boiling 5 g of the potassium titanate in 100 ml of water for ten hours and then analyzing the potassium eluted into the water by atomic absorption spectrophotometry. This value scarcely changed after prolonging the boiling period to 20 hours.

Table 1

| | Composition (% by weight) | | | Physical properties | | | Retention test (300° C, 15 min.) | | |
|---|---|---|---|---|---|---|---|---|---|
| | Liquid crystal polyester | Potassium titanate (% by weight, in terms of water-extractable potassium compounds) | Other additive | Tensile properties | | Notched Izod impact strength (kg•cm/cm) | Tensile properties | | Discoloration (ΔE) |
| | | | | Strength ($kg/cm^2$) | Elongation (%) | | Strength ($kg/cm^2$) | Elongation (%) | |
| Ex. 1 | 70 | 30 [0.04] | - | 2180 | 2.6 | 12.3 | 1920 | 2.2 | 1.7 |
| Ex. 2 | 70 | 30 [0.08] | - | 2150 | 2.5 | 12.1 | 1880 | 2.2 | 1.7 |
| Ex. 3 | 70 | 30 [0.17] | - | 2015 | 2.1 | 9.4 | 1760 | 1.8 | 2.0 |
| Ex. 4 | 69.5 | 30 [0.04] | epoxysilane *1 0.5 | 2250 | 2.8 | 13.4 | 2190 | 2.5 | 1.2 |
| Comp. Ex. 1 | 70 | 30 [0.32] | - | 1700 | 1.2 | 4.3 | 1200 | 0.8 | 3.8 |
| Comp. Ex. 2 | 70 | 30 [0.41] | - | 1420 | 0.9 | 2.2 | 989 | 0.7 | 4.7 |

*1 γ-glycidoxypropyltrimethoxysilane

Examples 5 to 7 and Comparative Examples 3 and 4

A polybutylene terephthalate resin (Duranex 2000 mfd. by Polyplastics Co., Ltd.) was evaluated in the same manner as the one described in Example 1. The extrusion temperature was approximately 250 °C while the molding was carried out at a cylinder temperature of approximately 250 °C, at a mold temperature of 80 °C and under an injection pressure of 750 $kg/cm^2$. The retention in the molding machine was effected at 260 °C for 60 minutes. Table 2 shows the results.

Examples 8 to 11 and Comparative Examples 5 and 6

The procedure of Example 1 was repeated except that a polyphenylene sulfide resin was employed and that the content of the potassium titanate fibers was 40 % by weight. The extrusion temperature was approximately 310 °C, while the molding was carried out at a cylinder temperature of approximately 310 °C, at a mold temperature of 150 °C and under an injection pressure of 60 $kg/cm^2$. The retention in the molding machine was effected at 300 °C for 30 minutes.
Table 3 shows the results.

Table 2

| | Composition (% by weight) | | Physical properties | | | Retention test (300° C, 15 min.) | | |
|---|---|---|---|---|---|---|---|---|
| | Polybutylene terephthalate | Potassium titanate (% by weight, in terms of water-extractable potassium compounds) | Tensile properties | | Notched Izod impact strength (kg•cm/cm) | Tensile properties | | Discoloration (ΔE) |
| | | | Strength ($kg/cm^2$) | Elongation (%) | | Strength ($kg/cm^2$) | Elongation (%) | |
| Ex. 5 | 70 | 30 [0.04] | 1070 | 2.6 | 8.7 | 980 | 1.7 | 2.3 |
| Ex. 6 | 70 | 30 [0.08] | 1030 | 2.6 | 8.4 | 940 | 1.6 | 2.4 |
| Ex. 7 | 70 | 30 [0.17] | 1010 | 2.5 | 8.5 | 870 | 1.4 | 3.1 |
| Comp. Ex. 3 | 70 | 30 [0.32] | 975 | 2.2 | 7.2 | 560 | 0.5 | 7.0 |
| Comp. Ex. 4 | 70 | 30 [0.41] | 935 | 1.8 | 7.0 | 430 | 0.4 | 9.3 |

Table 3

| | Composition (% by weight) | | | Physical properties | | | Retention test (300 °C, 15 min.) | | |
|---|---|---|---|---|---|---|---|---|---|
| | Polyphenylene sulfide | Potassium titanate (% by weight, in terms of water-extractable potassium compounds) | Other additive | Tensile properties | | Notched Izod impact strength (kg•cm/cm) | Tensile properties | | Discoloration (ΔE) |
| | | | | Strength ($kg/cm^2$) | Elongation (%) | | Strength ($kg/cm^2$) | Elongation (%) | |
| Ex. 8 | 60 | 40 [0.04] | - | 1470 | 0.9 | 2.7 | 1450 | 0.8 | 3.4 |
| Ex. 9 | 60 | 40 [0.08] | - | 1470 | 0.9 | 2.7 | 1420 | 0.8 | 3.3 |
| Ex. 10 | 60 | 40 [0.17] | - | 1420 | 0.8 | 2.5 | 1340 | 0.6 | 3.7 |
| Ex. 11 | 59 | 40 [0.08] | mercaptosilane *2 | 1550 | 0.9 | 3.0 | 1510 | 0.9 | 3.4 |
| Comp. Ex. 5 | 60 | 40 [0.32] | - | 1330 | 0.6 | 2.4 | 1150 | 0.4 | 4.5 |
| Comp. Ex. 6 | 60 | 40 [0.41] | - | 1280 | 0.5 | 2.2 | 1090 | 0.4 | 4.5 |

*2 γ-mercaptopropyltrimethoxysilane

Examples 12 to 15 and Comparative Examples 7 and 8

The evaluation of Example 1 was repeated except that a polyacetal resin (Duracon M90 mfd. by Polyplastics Co., Ltd.) was employed and that the content of the potassium titanate fibers was 20 % by weight. The extrusion temperature was approximately 200 °C, while the molding was carried out at a cylinder temperature of approximately 190 °C, at a mold temperature of 65 °C and under an injection pressure of 750 $kg/cm^2$. The retention in the molding machine was effected at 200 °C for 60 minutes. Table 4 shows the results.

Table 4

| | Composition (% by weight) | | | Physical properties | | | Retention test (200° C, 60 min.) | | |
|---|---|---|---|---|---|---|---|---|---|
| | Polyacetal | Potassium titanate (% by weight, in terms of water-extractable potassium compounds) | Other additive | Tensile properties | | Notched Izod impact strength (kg•cm/cm) | Tensile properties | | Discoloration (ΔE) |
| | | | | Strength ($kg/cm^2$) | Elongation (%) | | Strength ($kg/cm^2$) | Elongation (%) | |
| Ex. 12 | 80 | 20 [0.04] | - | 1100 | 3.7 | 5.7 | 860 | 2.4 | 3.5 |
| Ex. 13 | 80 | 20 [0.08] | - | 1080 | 3.8 | 5.8 | 870 | 2.4 | 3.4 |
| Ex. 14 | 80 | 20 [0.17] | - | 1040 | 3.6 | 5.5 | 740 | 2.3 | 4.1 |
| Ex. 15 | 79.5 | 20 [0.04] | aminosilane *3 | 1210 | 3.8 | 7.6 | 1060 | 2.8 | 5.7 |
| Comp. Ex. 7 | 80 | 20 [0.32] | - | 970 | 3.2 | 4.8 | 550 | 1.7 | 9.2 |
| Comp. Ex. 8 | 80 | 20 [0.41] | - | 920 | 3.0 | 4.5 | 520 | 1.7 | 11.3 |

*3 γ-aminopropyltrimethoxysilane

## Claims

1. A crystalline thermoplastic resin composition which comprises 99 to 40 percent by weight of a crystalline thermoplastic resin having a melting point of 160 °C or higher and 1 to 60 percent by weight of fibers of potassium titanate mainly comprising the potassium titanate having the formula: $K_2O.6TiO_2.nH_2O$ in which n is zero or 1/2, and containing 0.30 percent by weight or lower, based on the potassium titanate mixture in terms of potassium, determined according to the method as defined in the disclosure, of water-extractable potassium compounds.

2. A composition as claimed in claim 1, in which said resin is selected from a polyester, a polyarylene sulfide, a polyacetal, a polyamide or a mixture of two or more thereof.

3. A composition as claimed in claim 1 or claim 2, in which said potassium titanate comprises 50 percent by weight or higher of the potassium titanate having the said formula.

4. A composition as claimed in any preceding claim, which further comprises an epoxy compound, an isocyanate compound, a silane compound and/or another titanate compound.

5. A composition as claimed in any preceding claim, in which the content of water-extractable potassium is not more than 0.10 percent of potassium titanate by weight.

6. A composition as claimed in any preceding claim, in which the potassium titanate fibers have an average length of 10 to 30µm and an average diameter of 0.1 to 0.5µm.

7. A composition as claimed in any preceding claim, in which the proportion of potassium titanate fibres is in the range 3 to 50 percent of the total weight of the composition.